# EUROPÄISCHE PATENTSCHRIFT

(11) **EP 1 857 318 B1**
(45) Veröffentlichungstag und Bekanntmachung des Hinweises auf die Patenterteilung: **21.09.2011**
(21) Anmeldenummer: 07008635.0
(22) Anmeldetag: 27.04.2007
(51) Int. Cl.: B60N 2/00, B60N 2/48

(54) **Kopfstütze für einen Fahrzeugsitz**
Head rest for a vehicle seat
Appuie-tête pour un siège de véhicule

(30) Priorität: 16.05.2006 DE 102006023102
(43) Veröffentlichungstag der Anmeldung: 21.11.2007
(73) Patentinhaber: GRAMMER AG, 92224 Amberg (DE)
(72) Erfinder: Höß, Alfred, 93105 Tegernheim (DE); Truckenbrodt, Gerd, 92637 Weiden (DE)
(74) Vertreter: Ostriga, Sonnet, Wirths & Roche

(56) Entgegenhaltungen:
- DE-A1- 3 730 210
- DE-C1- 19 916 804

## Beschreibung

Die Erfindung betrifft eine Kopfstütze für einen Fahrzeugsitz gemäß dem Oberbegriff des Anspruches 1. Eine derartige Kopfstütze ist aus der DE 199 16 804 C1 bekannt.

Kopfstützen für einen Fahrzeugsitz, die mittels eines, vorzugsweise elektrischen, Antriebs relativ zu dem Fahrzeugsitz verlagerbar sind, sind bekannt und weit verbreitet. Insbesondere ist die Kopfstütze hierzu über zwei Tragstangen mit dem Lehnenkopf des Fahrzeugsitzes verbunden, wobei der Antrieb häufig im Bereich der Sitzlehne angeordnet ist und die Kopfstütze mit den beiden Tragstangen relativ zu dem feststehenden Fahrzeugsitz verlagern kann. Alternativ besteht auch die Möglichkeit, den Antrieb in der Kopfstütze vorzusehen, wobei die Tragstangen fest an dem Lehnenkopf angebracht sind und eine Verlagerung der Kopfstütze relativ zu den feststehenden Tragstangen möglich ist.

Eine Vielzahl von Druckschriften des Standes der Technik befasst sich mit der Problematik, eine optimale vertikale Ausrichtung der Kopfstütze an die Größe des Fahrgastes bzw. an die aktuelle Sitzposition des Fahrgastes zu erreichen. Dabei sind unterschiedliche Detektionseinrichtungen vorgeschlagen worden, die die Position eines Kopfes des Fahrgastes, der auf dem Fahrzeugsitz Platz genommen hat, zu detektieren versuchen. Die bekannten Vorrichtungen arbeiten häufig auch mit Sitzbelegungssystemen zusammen.

Bekannte Kopfstützen umfassen beispielsweise Detektionseinrichtungen, die z.B. gemäß der DE 199 33 769 A1 eine Einstellung des Innenspiegels und eine Winkeleinstellung der Sitzlehne des Fahrzeugsitzes aufnehmen. Bei solchen Detektionseinrichtungen besteht grundsätzlich die Gefahr, dass Fehleinstellungen, z.B. falsche Einstellungen des Innenspiegels, von der Detektionseinrichtung nicht erkannt werden und insoweit auch eine falsche Einstellung der Kopfstütze vorgenommen wird.

Andere bekannte Detektionseinrichtungen, wie sie beispielsweise in der DE 198 17 199 C1 vorgeschlagen wurden, arbeiten mit Sendern und Empfängern, die beispielsweise Ultraschallsignale oder Infrarotsignale benutzen, um die Position eines Kopfes eines Fahrgastes festzustellen. Andere Kopfstützen, beispielsweise gemäß der DE 34 27 466 C2, schlagen auch Lichtsender und -empfänger vor. Derartige Detektionseinrichtungen, die mit Sendern und Empfängern von elektromagnetischen Wellen arbeiten und die versuchen, die Reflektion der elektromagnetischen Wellen an dem Kopf des Fahrgastes zu messen, können als flächensensitive Detektionseinrichtungen bezeichnet werden. Probleme treten hier auf, wenn der Fahrgast beispielsweise eine Kopfbedeckung, z.B. einen Hut trägt, oder wenn der Fahrgast eine Zeitung liest, da an sämtlichen Konturen, also auch an der Kopfbedeckung oder an der Zeitung, eine Reflektion der elektromagnetischen Wellen stattfindet. Dies kann also ebenfalls zu Fehlpositionierungen der Kopfstütze führen.

Schließlich sind auch Kopfstützen bekannt geworden, die beispielsweise gemäß der DE 100 65 845 C2 Kontaktleiter vorsehen, die allerdings erfordern, dass der Kopf des Fahrgastes an der Kopfstütze anliegt, um eine Detektion der Kopfposition vornehmen zu können.

Die Erfindung geht aus von einer Kopfstütze gemäß dem Oberbegriff des Anspruches 1, wie sie aus der DE 102 50 416 A1 bekannt ist. Dort wird u.a. vorgeschlagen, als Kopfstützensensor einen kapazitiven Sensor anzubringen. Wie der Sensor ausgestaltet ist, lässt sich dieser Druckschrift nicht entnehmen. Auch gibt diese Druckschrift keine Hinweise, wie eine konkrete Ausbildung der Messelektronik oder der Steuerelektronik vorgenommen werden könnte.

Hiervon ausgehend liegt der Erfindung die Aufgabe zugrunde, eine Kopfstütze der bekannten Art gemäß dem Oberbegriff des Anspruches 1 derartig weiter zu entwickeln, dass sie bei einer einfachen Bauweise eine zuverlässige und sichere Detektion der Kopfposition zulässt.

Die Erfindung löst diese Aufgabe mit den Merkmalen des Anspruches 1, insbesondere mit denen des Kennzeichenteils, und ist demgemäß dadurch gekennzeichnet, dass die Detektionseinrichtung eine Elektrodenanordnung aufweist, die wenigstens drei Elektroden umfasst, die sich jeweils über einen wesentlichen Teil der Breite der Kopfstütze, nämlich über wenigstens ein Viertel der Breite der Kopfstütze, in Fahrzeugquerrichtung erstrecken, und die in Vertikalrichtung voneinander beabstandet sind.

Das Prinzip der Erfindung besteht im Wesentlichen darin, als Bestandteil der Detektionseinrichtung eine besondere Elektrodenanordnung vorzusehen, die mindestens drei Elektroden aufweist. Die Elektroden sind voneinander in Vertikalrichtung beabstandet und können somit als eine obere, eine mittlere und eine untere Elektrode bezeichnet werden. Wie später noch erläutert werden wird, ist auch eine höhere Zahl an Elektroden wählbar. Es können beispielsweise auch neun Elektroden vorgesehen sein. Die erfindungsgemäße Vorrichtung erfordert aber mindestens drei Elektroden, damit eine echte, später zu erläuternde Vergleichsmessung durchgeführt werden kann.

Die Elektroden erstrecken sich in Fahrzeugquerrichtung über einen wesentlichen Teil der Breite der Kopfstütze. Als wesentlicher Teil der Breite der Kopfstütze wird eine Längserstreckung der Elektroden angesehen, die sichere Messergebnisse auch noch dann zu liefern vermag, wenn der Kopf des Fahrgastes nicht exakt symmetrisch zur Mitte der Kopfstütze ausgerichtet ist, sondern von einer Mittelebene der Kopfstütze abweicht. Beispielsweise erstrecken sich die drei Elektroden jeweils, zumindest über ein Viertel der Breite der Kopfstütze. Vorzugsweise erstrecken sich die drei Elektroden jeweils über mehr als die Hälfte der Breite der Kopfstütze, gegebenenfalls auch über die gesamte Breite oder nahezu über die gesamte Breite der Kopfstütze.

Die Elektroden sind über elektrische Leitungen mit einer Steuereinheit verbunden, die Bestandteil der Detektionseinrichtung ist. Die Steuereinheit kann zwischen jeweils zwei Elektroden eine elektrische Wechselspannung einer vorgegebenen Frequenz und einer vorgegebenen Amplitude anlegen. Beispielsweise wird eine Wechselspannung zwischen der oberen Position und der mittleren Elektrode angelegt. Damit besteht die Möglichkeit, zwischen den beiden Elektroden ein elektrisches Wechselfeld zu erzeugen.

Die Steuereinheit kann des Weiteren mit einer Messelektronik ausgestaltet sein, die eine Messung vornehmen kann, in die eine Veränderung der elektrischen Wechselfelder eingeht oder die jedenfalls eine Feststellung zulässt, dass die elektrischen Wechselfelder beeinflusst worden sind.

Beispielsweise kann die Messelektronik den durch die mittlere Elektrode fließenden Strom messen. Diese Strommessung erlaubt einen Rückschluss darauf, ob sich zwischen der oberen und der mittleren Elektrode Materie mit einer von Luft verschiedenen Dielektrizitätszahl Er befindet, wodurch sich die Kapazität der Elektrodenanordnung ändert, oder nicht befindet, wodurch keine Kapazitätsveränderung veranlasst wäre.

Die obere und die mittlere Elektrode kann man sich zum besseren Verständnis der Funktionsweise als eine Art Plattenkondensatoranordnung vorstellen, der unterschiedliche Kapazitäten aufweist, je nachdem, ob sich zwischen den beiden Elektrodenplatten ein Medium befindet oder nicht. Zwei Platten eines Plattenkondensators können mit einer geeigneten Wechselspannung einer vorgegebenen Frequenz beaufschlagt werden. Für den Fall, dass zwischen den Platten des Plattenkondensators beispielsweise ein Material mit einer höheren relativen Dielektrizitätszahl Er als der Dielektrizitätszahl von Luft (εᵣ Luft = 1) angeordnet wird, beeinflusst dieses Material die Kapazität des Plattenkondensators, den Verlauf der elektrischen Feldlinien zwischen den Platten und letztendlich auch eine Messung des durch den Kondensator hindurchfließenden Wechselstromes.

Die Anordnung umfassend die obere und die mittlere Elektrode der Elektrodenanordnung der erfindungsgemäßen Kopfstütze ist insoweit mit einem Plattenkondensator vergleichbar, mit der Ausnahme, dass es sich bei den Elektroden, jedenfalls vorzugsweise, nicht um Plattenelektroden handelt und mit der Ausnahme, dass sich das zu messende Medium nicht exakt zwischen den beiden Elektroden des Plattenkondensators befindet, sondern auf einer gemeinsamen Seite einer gedachten Verbindungslinie zwischen den beiden Elektroden. Nichtsdestotrotz kann aber auch bei der erfindungsgemäßen geometrischen Anordnung im Unterschied zu dem vorbeschriebenen erklärenden Beispiel eines Plattenkondensators auf die gleichen physikalischen Effekte verwiesen werden. Befindet sich ein Medium mit einer Dielektrizitätszahl εᵣ ≠ Er Luft nahe der oberen und/oder nahe der mittleren Elektrode, so liefert eine Messung, beispielsweise eines durch die mittlere Elektrode hindurchfließenden Wechselstroms, eine Aussage darüber, dass sich dort irgendein Material, das von Luft verschieden ist, befindet.

Der Erfindung geht es aber nun nicht darum, exakt die Dielektrizität Er des Kopfes des Benutzers zu messen, sondern vielmehr darum, die Kopfstütze hinsichtlich ihrer vertikalen Höhe so einzustellen, dass sie optimal an die Position des Kopfes des Fahrgastes angepasst ist und insbesondere im Falle eines Crashs dem Fahrgast eine höchstmögliche Sicherheit bieten kann. Dafür ist es erforderlich, dass die Kopfstütze, bei vertikaler Betrachtung, im Wesentlichen mittig, an dem Hinterkopf des Fahrgastes anliegt bzw. möglichst nahe an den Kopf des Benutzers herangebracht ist.

Um die Position des Kopfes des Fahrgastes ermitteln zu können, ist bei der erfindungsgemäßen Kopfstütze die Möglichkeit geschaffen, eine Vergleichsmessung zwischen der mittleren und der oberen Elektrode einerseits, und zwischen der mittleren und der unteren Elektrode andererseits durchzuführen. Beispielsweise ist die mittlere Elektrode exakt in der Mitte, bezogen auf die vertikale Erstreckung, der Kopfstütze angeordnet. Die obere Elektrode kann unter einem ersten festgelegten Abstand relativ zu der mittleren Elektrode und die untere Elektrode kann, unter dem gleichen festen Abstand, nach unten von der mittleren Elektrode beabstandet sein.

Für den Fall, dass die Kopfstütze optimal zu der aktuellen Kopfposition des Fahrgastes ausgerichtet ist, sollte die mittlere Elektrode etwa auf der Höhe des Schwerpunktes des Kopfes des Fahrgastes angeordnet sein. Der Schwerpunkt des Kopfes des Fahrgastes befindet sich, wie Untersuchungen der Anmelderin ergeben haben, typischerweise in einem Bereich einer Höhe des Kopfes, an der der Kopf eine gewisse Ausbuchtung nach hinten besitzt. Die mittlere Elektrode befindet sich bei optimaler Ausrichtung der Kopfstütze relativ zu der Kopfstütze in ihrer aktuellen Kopfstützenposition, somit etwa unmittelbar benachbart dieser Ausbuchtung.

Nimmt die Detektionseinrichtung bei dieser optimalen Kopfstützenausrichtung eine Messung zwischen der oberen Elektrode und der mittleren Elektrode vor, in dem ein elektrisches Wechselfeld zwischen den Elektroden angelegt wird und beispielsweise der durch diese Elektrodenanordnung fließende Wechselstrom gemessen wird, so erhält die Detektionseinrichtung einen Messwert, in den die Dielektrizität Er eines Bereiches des Kopfes des Fahrgastes, insbesondere eines Bereiches der Ausbuchtung, mit eingeht. Nimmt die Detektionseinrichtung nunmehr eine zweite Messung zwischen der mittleren Elektrode und der unteren Elektrode auf genau die gleiche Weise vor, so liefert diese zweite Messung ein zweites Messergebnis, welches sich von dem ersten Messergebnis nicht wesentlich unterscheiden wird, da der Kopf, bezogen auf eine im Wesentlichen durch den Schwerpunkt und die zuvor erwähnte Ausbuchtung hindurchgehende, sich im Wesentlichen horizontal erstreckende Ebene, im Wesentlichen spiegelbildlich ausgebildet ist, jedenfalls wenn man das dielektrische Verhalten betrachtet.

Genaugenommen wird man hier von einem Dielektrizitäts-Modul oder Tensor sprechen können, das den Kopf eines Benutzers als eine dreidimensionale Matrix in Zahlenwerten erfassen kann. In erster Näherung und der Einfachheit halber soll aber im Folgenden von einer spiegelsymmetrischen Ausbildung eines solchen Dielektrizitäts-Moduls als elektrotechnische oder physikalische Darstellung eines Kopfes eines Fahrgastes im elektrischen Wechselfeld ausgegangen werden.

Festzuhalten bleibt jedenfalls, dass sich die Messergebnisse einer ersten Messung zwischen oberer und mittlerer Elektrode und einer zweiten Messung zwischen mittlerer und unterer Elektrode bei optimal ausgerichteter Kopfstütze nicht oder jedenfalls nicht wesentlich unterscheiden werden.

Ein Vergleich der beiden Messergebnisse kann von der Detektionseinrichtung oder von einer der Detektionseinrichtung zugeordneten Vergleichsvorrichtung oder Steuereinheit oder Steuerelektronik jedenfalls so interpretiert werden, dass keine Änderung der Kopfstützenposition erforderlich ist, da die Kopfstütze ihre optimale Position bereits erreicht hat.

Nunmehr soll der Fall beschrieben werden, dass die Kopfstütze eine nicht-optimale Relativ-Position einnimmt, und beispielsweise zu hoch ausgefahren ist.

Der Schwerpunkt des Kopfes befindet sich in dieser Position unterhalb der mittleren Elektrode. Wiederum soll nämlich angenommen werden, dass sich die mittlere Elektrode, bei Betrachtung der Vertikalrichtung, im Wesentlichen mittig an der Kopfstütze befindet. Eine Messung zwischen der oberen Elektrode und der mittleren Elektrode wird in dieser Situation zu einem anderen Messergebnis führen, als eine Messung zwischen der mittleren Elektrode und der unteren Elektrode. Dies liegt daran, dass sich der Schwerpunkt des Kopfes und damit auch, vereinfacht ausgedrückt, ein Schwerpunkt des Dielektrizitäts-Moduls, unterhalb der mittleren Elektrode befindet. Das elektrische Wechselfeld zwischen der oberen Elektrode und der mittleren Elektrode wird von dem Kopf nunmehr anders beeinflusst, als das elektrische Wechselfeld zwischen der mittleren Elektrode und der unteren Elektrode. Diese unterschiedliche Beeinflussung führt zu unterschiedlichen Feldlinienfeldern bzw. zu unterschiedlichen Kapazitäten eines gedachten, durch jeweils zwei Elektroden ausgebildeten Kondensators.

Die unterschiedlichen Messergebnisse der ersten Messung zwischen der oberen und der mittleren Elektrode und der zweiten Messung zwischen der mittleren und der unteren Elektrode können von der Detektionseinrichtung oder von einer dieser zugeordneten Steuereinheit oder Steuerelektronik nunmehr so erkannt oder interpretiert werden, dass eine optimale Position der Kopfstütze relativ zu dem Fahrzeugsitz noch nicht erreicht worden ist, und insoweit eine Ansteuerung der Kopfstütze zur Höhenverlagerung, betätigt durch den Antrieb, erfolgen muss. Die Steuereinheit oder die Steuerelektronik wird bei Feststellung dieses zuvor beschriebenen Ergebnisses eines Vergleichs der Messwerte dafür sorgen, dass die Kopfstütze um einen z.B. vorgegebenen festen, oder auch in Abhängigkeit des Vergleichs der Messergebnisse zu bestimmenden Verlagerungsweg nach unten verfahren wird.

Nachfolgend kann noch eine weitere Messung sowie ein Vergleich der erhaltenen Messergebnisse vorgenommen werden, um zu überprüfen, ob bzw. dass die Kopfstütze in eine optimale Position verfahren worden ist.

Stellt die Detektionseinrichtung nach Durchführung eines Vergleichs der Messergebnisse fest, dass eine optimale Position nicht besteht, kann entweder durch Verfahren der Kopfstütze entlang eines vorgegebenen Verlagerungsweges unmittelbar die optimale Kopfstützenposition erreicht werden, oder alternativ können viele kleine, sukzessiv aufeinanderfolgende Verlagerungsschritte vorgenommen werden. Für den Fall, dass mehrere kleine Verlagerungswege nacheinander durchfahren werden sollen, empfiehlt es sich, eine schnellere Messelektronik und einen schnelleren Antrieb zu verwenden, als es erforderlich wäre, wenn nur eine einzige Verfahrbewegung in einem Zug zur Erreichung der optimalen Kopfstützenposition vorgesehen ist.

Hinsichtlich des tatsächlichen Ablaufs eines Messverfahrens wird auf die Beschreibung eines Ausführungsbeispiels in den Zeichnungen verwiesen. Festgehalten werden soll allerdings, dass die erfindungsgemäße Kopfstütze aufgrund einer Elektrodenanordnung mit wenigstens drei Elektroden eine Vergleichsmessung erlaubt, d.h. die Durchführung einer ersten Messung und die Durchführung einer zweiten Messung sowie nachfolgend einen Vergleich der beiden Messergebnisse zulässt. Eine solche Vergleichsmessung kann auf denkbar einfache Weise Messergebnisse liefern, die einer Steuereinheit oder einer Steuerelektronik die Information angeben können, ob sich die Kopfstütze, bezogen auf die Mitte des Kopfes des Fahrgastes, in einer optimalen Position oder in einer nicht-optimalen Position, entweder zu hoch oder zu niedrig bezogen auf die Kopfposition, befindet.

Damit kann eine Detektion der Position des Kopfes durchgeführt werden, die unabhängig ist von anderen Sensoren, wie beispielsweise Sitzbelegungssensoren. Außerdem kann auf eine absolute Messung der relativen Dielektrizität des Kopfes verzichtet werden, die grundsätzlich mit großen Unsicherheiten behaftet wäre. Durch die vorgeschlagene Elektrodenanordnung mit drei Elektroden und die sich daraus ergebende Möglichkeit eines Vergleichs von Messergebnissen, kann mit hoher Zuverlässigkeit ein Messsignal erzielt werden, welches unmittelbar eine Aussage über die relative Position des Kopfes bezogen auf die mittlere Elektrode der Kopfstütze liefert. Demgemäß kann auch auf Referenzwerte ganz verzichtet werden.

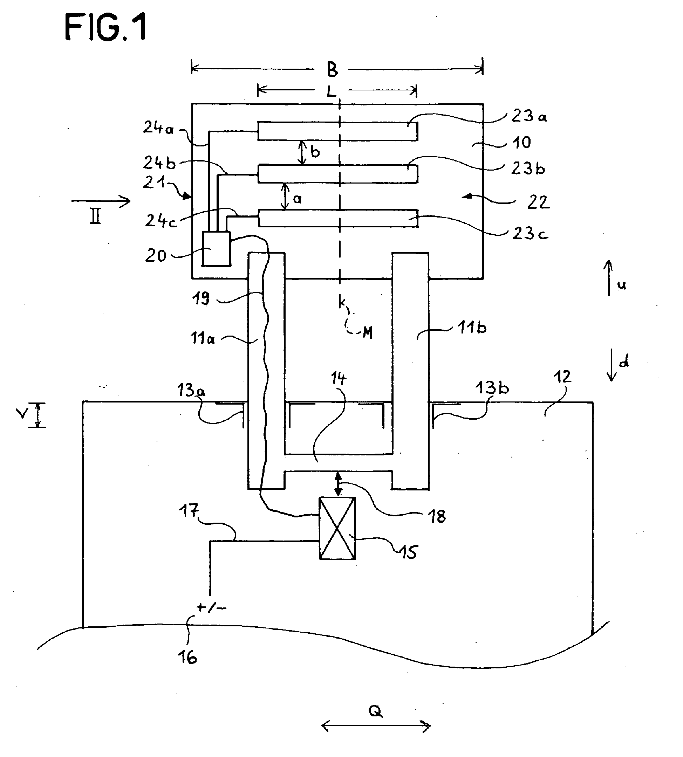

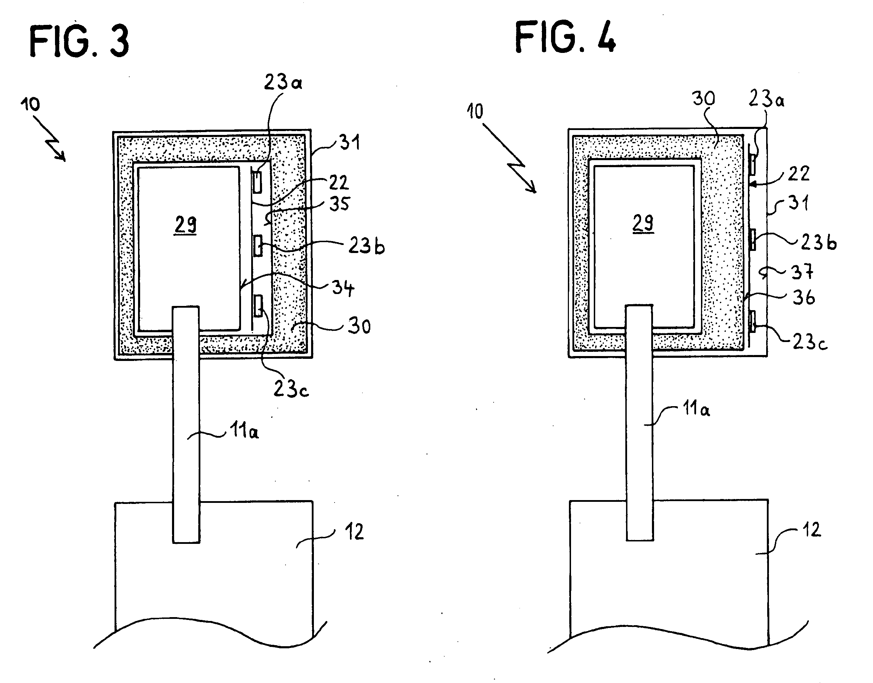

Aus der DE 199 16 804 C1 ist es grundsätzlich bekannt, eine Kopfstütze mit Kondensatorplatten zu versehen. Auch ist dort eine geometrische Anordnung dreier Kondensatorplatten (vgl. dort Fig. 1) offenbart, bei welcher die Kondensatorplatten jedoch überlappend angeordnet sind. Die Durchführung der in der vorliegenden Patentanmeldung beschriebenen Messverfahren ist bei einer überlappenden Anordnung jedenfalls nicht ohne weiteres möglich. Vielmehr ist beschrieben, dass die einzelnen Kondensatorplatten jeweils (in der dortigen Fig. 3 durch ihre Amplitude dargestellte) separate Sensorsignale betreffen und die Kopfstütze ausgehend von ihrer eingefahrenen Position, in welcher sie mit ihrer Unterkante auf der Oberkante der Lehne aufsitzt, vertikal hoch verlagert wird, bis eines der ermittelten Sensorsignale abnimmt, während ein anderes noch zunimmt. Außerdem erstrecken sich die platten, lediglich im Schnitt dargestellten Kondensatorplatten offensichtlich riegelartig in vertikaler Längsausrichtung. Eine Erstreckung der Kondensatorplatten in Fahrzeugquerrichtung über einen wesentlichen Teil der Breite der Kopfstütze, insbesondere über ein Viertel der Breite, ist nicht offenbart.

Die DE 37 30 210 A1 offenbart zudem eine Vorrichtung zur Höhenverstellung einer Kopfstütze mit einer Detektionseinrichtung zur Erkennung einer Position eines Kopfes, bei welcher die Detektionseinrichtung als leistenartige Sensoranordnung ausgebildet ist. Diese Sensoranordnung weist jedoch lediglich nicht näher beschriebene Drucksensoren auf, welche auf ein Drücken des Kopfes reagieren. Eine Elektrodenanordung, die wenigstens drei Elektroden umfasst, welche sich jeweils über wenigstens ein Viertel der Breite einer Kopfstütze in Fahrzeugquerrichtung erstrecken, ist aus diesem Stand der Technik nicht bekannt.

Gemäß einer vorteilhaften Ausgestaltung der Erfindung umfasst die Elektrodenanordnung wenigstens eine obere, eine mittlere und eine untere Elektrode. Vorzugsweise weist die obere Elektrode zu der mittleren Elektrode einen Abstand auf, der identisch ist zu dem Abstand zwischen der mittleren Elektrode und der unteren Elektrode.

Die Elektrodenanordnung kann von einer vorgefertigten handhabbaren Baueinheit gebildet sein. Diese Baueinheit kann bei der Montage der Kopfstütze auf besonders einfache Weise befestigt werden. Die Baueinheit schafft die Möglichkeit, definierte, exakte und festgelegte Abstände zwischen den Elektroden voneinander zu gewährleisten. Diese Abstände können bei der Herstellung der Baueinheit mit nur geringen Toleranzen eingehalten werden. Dies erleichtert die Montage der Kopfstütze und dies ermöglicht besonders zuverlässige Messwerte.

Die Elektroden weisen gemäß einer vorteilhaften Ausgestaltung der Erfindung einen vorgegebenen, festen Abstand zueinander auf. Insbesondere sind die Abstände bereits bei Herstellung der zuvor erwähnten Baueinheit festgelegt worden. Der vorgegebene feste Abstand gewährleistet eine zuverlässige Detektion der Kopfposition über die Lebensdauer der Kopfstütze.

Die Elektroden erstrecken sich über wenigstens ein Viertel der Breite der Kopfstütze in Fahrzeugquerrichtung. Vorzugsweise erstrecken sich die Elektroden jeweils über wenigstens ein Drittel der Breite, weiter vorzugsweise über wenigstens die Hälfte der Breite der Kopfstütze. Weiter vorzugsweise können sich die Elektroden über die gesamte oder über nahezu die gesamte Breite der Kopfstütze in Fahrzeugquerrichtung erstrecken. Je länger die Elektroden in Fahrzeugquerrichtung ausgebildet sind, um so bessere und zuverlässigere bzw. genauere Messwerte sind erzielbar, selbst wenn die Kopfposition von einer Mittelebene der Kopfstütze, die sich in Fahrzeuglängsrichtung und in Vertikalrichtung erstreckt, abweicht.

Die Elektroden können von linienförmigen Leitern oder von flachen, langgestreckten, beispielsweise auch rechteckförmigen elektrisch leitenden Körpern, beispielsweise von Metallfolien, metallischen Plattenelementen, Aufdrucken od. dgl. gebildet sein.

Der Elektrodenanordnung ist vorzugsweise eine Steuereinheit zugeordnet, mit der zwischen der oberen und der mittleren Elektrode eine erste Messung und mit der zwischen der mittleren und der unteren Elektrode eine zweite Messung durchführbar ist. Die durchzuführenden Messungen können beispielsweise die Beaufschlagung der jeweiligen Elektroden mit einer Wechselspannung oder mit Pulsen beinhalten, sowie eine Messung des durch die Elektroden hindurchfließenden Wechselstroms vorsehen. Alternativ besteht auch die Möglichkeit, an einer der beiden Elektroden Spannungssignale, beispielsweise Spannungsimpulse oder Wechselspannungssignale, anzulegen und an der jeweils gegenüberliegenden anderen Elektrode das erhaltene, induzierte Spannungssignal zu messen. In jedem Falle werden zwischen jeweils zwei Elektroden elektrische Wechselfelder erzeugt, die von einem in der Nähe angeordneten Kopf eines Fahrgastes beeinflusst werden können. Diese Beeinflussung ist beispielsweise über eine Spannungs- oder eine Strommessung zu erfassen. Hinsichtlich der Art und Weise, wie man die relative Dielektrizität, die man auch relative Permittivität nennt, misst, sowie zur Erklärung des physikalischen Hintergrundes kann auf das deutsche Patent DE 199 37 387 C2 und auf das europäische Patent EP 1079203 B1 verwiesen werden, sowie auf sämtlichen in den Prüfungs- und Einspruchsverfahren dieser beiden Schutzrechte behandelten Stand der Technik, der eine eingehende Beschreibung der physikalischen Effekte enthält, die auftreten, wenn sich Materie in einem elektrischen Wechselfeld befindet.

Die Ergebnisse der ersten Messung und der zweiten Messung sind miteinander vergleichbar. Diese Vergleichbarkeit lässt auf einfache Weise einen Rückschluss auf die relative Kopfstützenposition bezogen auf die mittlere Elektrode zu.

Vorzugsweise ist mittels der Steuereinheit ein elektrisches Wechselfeld zwischen jeweils zwei Elektroden anlegbar. Die Steuereinheit, oder ein Teil der Steuereinheit, jedenfalls ein Teil der Detektionseinrichtung, kann hierzu eine Wechselspannung einer vorgegebenen Amplitude und Frequenz zwischen jeweils zwei Elektroden, also für die Durchführung der ersten Messung zwischen der oberen und der mittleren Elektrode und für die Durchführung der zweiten Messung zwischen der mittleren und der unteren Elektrode, anlegen.

Die erste und die zweite Messung liefern jeweils ein Messergebnis, in das die Dielektrizität εᵣ des Kopfes des Fahrgastes, oder zumindest eines Teils des Kopfes des Fahrgastes, insbesondere der Bereich der Ausbuchtung, mit eingeht. Eine solche Messung kann insbesondere auch eine Kapazitätsmessung sein, wobei die Messung der Kapazität nicht das Ziel der Messung ist, sondern lediglich eine Vergleichsmessung zur Ermittlung einer relativen Position des Kopfes relativ zur Kopfstütze vorgenommen werden soll. Dennoch wird, je nach Ausbildung der Messschaltung, die Kapazität eines Bereiches des Kopfes des Fahrgastes mit eingehen.

Die Detektionseinrichtung weist eine Vergleichsvorrichtung auf, mit der die Ergebnisse der ersten Messung und der zweiten Messung miteinander vergleichbar sind. Die Vergleichsvorrichtung kann beispielsweise ein herkömmliches bekanntes elektronisches Bauelement sein, welches die Messwerte zweier Messungsergebnisse miteinander vergleicht und in Abhängigkeit des durchgeführten Vergleichs auch eine Entscheidung treffen kann, ob die Kopfstütze verlagert wird oder nicht, bzw. in welche Richtung sie verlagert wird, bzw. gegebenenfalls auch, um welchen Verstellweg die Kopfstütze verlagert wird. Beispielsweise kann die Detektionseinrichtung mit einer Elektronik ausgestattet sein, die auch einen Speicher aufweist, in der tabellarische Werte abgelegt sind, die abgerufen werden können. Die tabellarischen Werte können beispielsweise eine Information darüber enthalten, dass bei Feststellung eines Vergleichs zwischen einem ersten Messwert und einem zweiten Messwert in Abhängigkeit des gewonnenen Vergleichswertes eine Verstellung um einen großen Verstellweg oder eine Verstellung um nur einen kleinen Verstellweg vorgenommen wird.

Die Elektrodenanordnung kann mit einer Steuereinheit verbunden sein. Vorzugsweise ist jede Elektrode über eine gesonderte Zuleitung mit der Steuereinheit verbunden. Die Steuereinheit kann die Elektroden ansprechen, indem sie sie mit Pulssignalen oder mit Wechselspannung versorgt. Die Elektrodenanordnung kann über die Verbindung mit der Steuereinheit aber vorzugsweise auch ausgelesen werden, wobei die Einheit, mit der eine Strom- oder Spannungsmessung vorgenommen wird, vorzugsweise ebenfalls Bestandteil der Steuereinheit ist.

Die Steuereinheit kann in der Kopfstütze angeordnet sein, was eine kompakte Bauweise ermöglicht. Die Steuereinheit kann alternativ auch im Bereich der Lehne des Fahrzeugsitzes angeordnet sein und über elektrische Leitungen, die vorzugsweise durch die hohlen Tragstangen hindurch verlaufen, mit der Elektrodenanordnung verbunden sein.

Die Steuerungseinheit kann alternativ auch im Bereich des Sitzgestelles des Fahrzeugsitzes oder alternativ in einem Bereich distanziert vom Sitz des Fahrzeuges angeordnet werden. Für den Fall, dass die Steuereinheit in der Kopfstütze angeordnet ist, kann der Verkabelungsaufwand reduziert werden. Je nachdem, welche Dimensionen die Steuereinheit aufweist, ist eine Unterbringung der Steuereinheit fern von der Kopfstütze aber gleichermaßen möglich.

Die Kopfstütze ist über wenigstens eine, vorzugsweise über zwei Tragstangen, an dem Fahrzeugsitz befestigt. Die Tragstangen ermöglichen durch eine Verlagerung, entweder relativ zu der Lehne des Fahrzeugsitzes oder relativ zu der Kopfstütze, eine Verlagerung der Kopfstütze relativ zu dem Fahrzeugsitz.

Der Antrieb zur Verlagerung der Kopfstütze relativ zu dem Fahrzeugsitz ist vorzugsweise in einer Lehne des Fahrzeugsitzes angeordnet. Alternativ ist vorstellbar, dass der Antrieb zur Verstellung der Kopfstütze in der Kopfstütze angeordnet ist.

Weiter vorzugsweise kann ein metallisches Abschirmelement vorgesehen sein, welches der Elektrodenanordnung zugeordnet ist. Das Abschirmelement ist vorzugsweise auf der dem Kopf abgewandten Seite der Elektrodenanordnung angeordnet. Das metallisch Abschirmelement kann beispielsweise von einer dünnen metallischen Folie gebildet sein, die unmittelbar benachbart der Elektrodenanordnung vorgesehen ist. Das Abschirmelement kann, wie Versuche der Anmelderin ergaben, überraschenderweise die Messgenauigkeit der Vorrichtung erhöhen.

Die Elektrodenanordnung ist vorzugsweise nahe der dem Kopf des Fahrgastes zugewandten, vorderen Seite der Kopfstütze angeordnet. Dies ermöglicht eine besonders genaue Messung, da der Abstand zwischen dem Kopf des Fahrgastes und der Elektrodenanordnung auf diese Weise minimiert ist.

Angemerkt sei in diesem Zusammenhang, dass mit der erfindungsgemäßen Kopfstütze eine berührungslose Detektion der Position des Kopfes, bezogen auf die Kopfstütze, durchgeführt wird. Es ist nicht erforderlich, dass der Kopf die Vorderseite der Kopfstütze kontaktiert. Letzteres steht der Messung allerdings auch nicht entgegen.

Im Gegensatz zu den eingangs beschriebenen flächen-sensitiven Messungen durch Reflektionen von elektromagnetischen Wellen an Grenzflächen, erfolgt durch die zuvor beschriebene kapazitive Messung über die Änderung der elektrischen Wechselfelder eine Volumenmessung. Es wird eine Messung von Materialeigenschaften vorgenommen, wobei der erhöhte Gehalt an Wasser im Bereich des Kopfes, der deutlich höher ist, als der Wassergehalt der im Fahrgastraum befindlichen Luft, eine zuverlässige Aussage darüber zulässt, wo sich der Kopf des Fahrgastes befindet, unabhängig davon, ob auf dem Kopf Kopfbedeckungen angeordnet sind oder nicht.

Durch die beschriebene typische Schädelausbildung in Form der Ausbuchtung ist darüber hinaus ein exponierter Kopfbereich zu der Kopfstütze hin orientiert, der für die Messung zur Verfügung steht und auf gleicher Höhe des Kopfes wie dessen Schwerpunkt angeordnet ist. Damit kann jedenfalls der Bereich der Ausbuchtung des Kopfes hinsichtlich seiner dielektrischen Eigenschaften im Wechselfeld erfasst werden und die Position des Kopfes für die Detektionseinrichtung präzise erkennbar gestaltet werden.

Die Elektrodenanordnung ist bei einer vorteilhaften Ausgestaltung der Erfindung folienartig ausgebildet. Dies ermöglicht eine besonders einfache Bauweise und Montage der erfindungsgemäßen Kopfstütze. Die folienartig ausgebildete Elektrodenanordnung kann beispielsweise, ähnlich wie dies von Sitzbelegungsfolien her bekannt ist, eine mehrschichtige Folie sein, wobei die metallischen Elektroden auf die Folie, insbesondere auf eine Schicht der Folie, aufgedruckt sind. Auch die Leiterbahnen, die die Elektrode mit der Steuereinheit verbinden, können zumindest abschnittsweise Bestandteil der Folie sein. Als Folie wird im Sinne der Erfindung z.B. auch ein dünnes, flächenhaftes, gegebenenfalls auch flexibles Gebilde bezeichnet, welches sich unter Umständen auch an eine Kontur der Kopfstütze oder eines Teils der Kopfstütze annähern kann.

Bei einer weiteren vorteilhaften Ausgestaltung der Erfindung ist die Elektrodenanordnung zwischen einem Polsterteil der Kopfstütze und einem Bezugsteil der Kopfstütze angeordnet. Diese Ausgestaltung der Erfindung ermöglicht bei einer herkömmlichen Bauweise der Kopfstütze eine einfache Anbringung der Elektrodenanordnung, wobei die insbesondere sehr dünn ausgebildete, beispielsweise folienartig ausgebildete Elektrodenanordnung zwischen dem Polsterteil und dem Bezugsteil, also beispielsweise einem Bezugsstoff oder einem Lederbezug der Kopfstütze, angeordnet wird. Durch die entsprechend dünne, vorzugsweise auch flexible Ausbildung der Elektrodenanordnung werden die mechanischen Eigenschaften des Polsterteils und auch der Komfort der Kopfstütze, den das elastische kompressible Polsterteil bereitstellt, nicht beeinträchtigt.

Bei einer alternativen Ausgestaltung der Erfindung ist die Elektrodenanordnung zwischen einem Tragkörper für ein Polsterteil und dem Polsterteil angeordnet. Der Tragkörper ist beispielsweise von einem Kunststoffkasten gebildet, der auch als Polsterträger bezeichnet wird. Das Polsterteil umgibt diesen Tragkörper typischerweise allseitig. Die Elektrodenanordnung kann beispielsweise, aber nicht unbedingt erforderlicherweise, wiederum als Elektrodenfolie ausgebildet, zwischen dem Tragkörper und dem Polsterteil angeordnet werden. Bei dieser Ausgestaltung der Erfindung hat die Elektrodenanordnung, selbst wenn sie nicht flexibel ausgebildet ist, keinen Einfluss auf das Komfortverhalten des Polsterteils.

Weitere Vorteile der Erfindung ergeben sich anhand der nicht zitierten Unteransprüche sowie aus der nun folgenden Beschreibung mehrerer in den Figuren dargestellter Ausführungsbeispiele. Darin zeigen:
- Fig. 1: in schematischer, teilgeschnittener Ansicht ein Ausführungsbeispiel der erfindungsgemäßen Kopfstütze, die über zwei Tragstangen an einen Kopfbereich einer Lehne eines Fahrzeugsitzes angebunden ist, wobei die Kopfstütze eine Elektrodenanordnung mit drei Elektroden aufweist,
- Fig. 2: in einer schematischen, teilgeschnittenen Seitenansicht die Kopfstütze aus Fig. 1 gemäß Ansichtspfeil II, wobei zusätzlich, lediglich schematisch angedeutet, der Kopf eines Fahrgastes dargestellt ist,
- Fig. 3: in einer teilgeschnittenen Ansicht ein weiteres Ausführungsbeispiel einer erfindungsgemäßen Kopfstütze etwa in einer Darstellung gemäß Fig. 2, und
- Fig. 4: in einer Darstellung gemäß Fig. 3 ein weiteres Ausführungsbeispiel einer erfindungsgemäßen Kopfstütze.

Die Ausführungsbeispiele der erfindungsgemäßen Kopfstütze sind in ihrer Gesamtheit in den Figuren mit 10 bezeichnet und sollen anhand der Figuren nunmehr hinsichtlich ihrer Funktionsweise und hinsichtlich ihres strukturellen Aufbaus erläutert werden. Angemerkt sei, dass soweit in den Figuren gleiche oder vergleichbare Teile oder Elemente dargestellt sind, diese der Übersichtlichkeit halber mit gleichen Bezugszeichen, teilweise unter Hinzufügung kleiner Buchstaben bezeichnet worden sind.

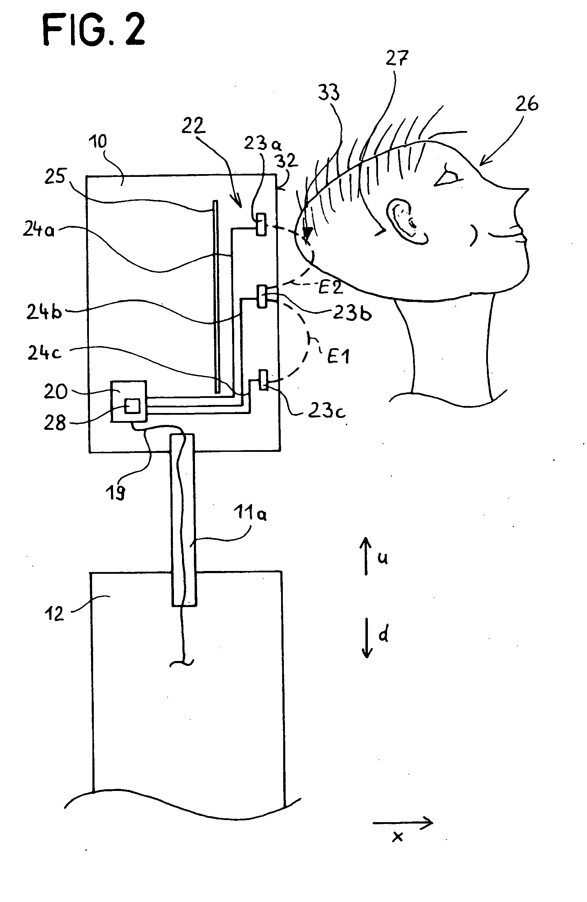

Fig. 1 zeigt in einer schematischen, teilgeschnittenen Ansicht ein erstes Ausführungsbeispiel einer erfindungsgemäßen Kopfstütze 10, bei Betrachtung von der Vorderseite des Fahrzeuges her. Die Fahrtrichtung des Fahrzeuges ist in Fig. 2 mit x bezeichnet.

Fig. 1 zeigt, dass die Kopfstütze 10 typischerweise über zwei Tragstangen 11a und 11b an einem Fahrzeugsitz 12, nämlich an dem Lehnenkopf der Sitzlehne befestigt ist. Hierzu sind im Bereich des Lehnenkopfes typischerweise Führungshülsen 13a, 13b vorgesehen, die die Tragstangen 11a und 11b aufnehmen und eine axiale Verschiebbarkeit zulassen. Die beiden Tragstangen 11a und 11b sind bei dem Ausführungsbeispiel der Fig. 1 über eine Quertraverse 14 miteinander verbunden. Im Bereich der Rückenlehne 12 ist ein Antrieb 15 angeordnet, der nur schematisch dargestellt ist und über einen angedeuteten Wirkpfeil 18 eine Wirkverbindung mit der Traverse 14 erkennen lässt. Der Antrieb 15 ist über eine Spannungsversorgungsleitung 17 mit einer angedeuteten Spannungsquelle 16, nämlich typischerweise mit der Batterie des Fahrzeuges, verbunden.

Der Antrieb kann auf die Quertraverse 14 oder auf eine oder beide der Tragstangen 11a, 11b einwirken und auf diese Weise die Kopfstütze 10 relativ zu dem Fahrzeugsitz 12 vertikal, das heißt in seiner Höhe verlagern. Die Aufstellbewegung der Kopfstütze 10 ist mit u und die Abwärtsbewegung ist in Fig. 1 mit d bezeichnet. Der Verlagerungshub v kann beispielsweise in der Größenordnung von 100 mm liegen.

Die Kopfstütze 10 weist eine Detektionseinrichtung 21 auf, zu der eine Steuereinheit 20 und eine Elektrodenanordnung 22 gehört. Die Elektrodenanordnung 22 umfasst drei Elektroden, nämlich eine obere Elektrode 23a, eine mittlere Elektrode 23b und eine untere Elektrode 23c, die jeweils über gesonderte Zuleitungen 24a, 24b, 24c mit der Steuereinheit 20 verbunden sind. Der Abstand zwischen der oberen Elektrode 23a und der mittleren Elektrode 23b ist mit b bezeichnet und der Abstand zwischen der mittleren Elektrode 23b und der unteren Elektrode 23c ist mit a bezeichnet. Die beiden Abstände a, b sind festgelegt, was beispielsweise gewährleistet ist, wenn die gesamte Elektrodenanordnung 22 als vorgefertigte handhabbare Baueinheit ausgebildet ist. Die Elektrodenanordnung 22 kann beispielsweise folienartig ausgebildet sein. Bei einem solchen Ausführungsbeispiel können die drei Elektroden 23a, 23b, 23c in eine Folienanordnung, beispielsweise in eine Schichtaufbau-Konstruktion von Kunststofffolien, eingebettet sein, wobei die metallischen Elektroden auf eine Folienbahn aufgedruckt sein können. Vorzugsweise sind die Abstände a und b identisch gewählt.

Fig. 1 lässt erkennen, dass jede der Elektroden 23a, 23b, 23c eine axiale Länge L aufweist, die sich über einen wesentlichen Teil der Breite B der Kopfstütze 10 in Fahrzeugquerrichtung Q erstreckt. Bei dem Ausführungsbeispiel der Fig. 1 übersteigt die axiale Länge L etwa die Hälfte der Breite B. Bei nicht dargestellten Ausführungsbeispielen sind die Elektroden 23a, 23b, 23c noch länger ausgebildet und können sich beispielsweise auch bis nahezu über die gesamte Breite B der Kopfstütze 10 erstrecken. Bei einem anderen, nicht dargestellten Ausführungsbeispiel der Erfindung sind die Elektroden 23a, 23b, 23c kürzer ausgebildet und erstrecken sich über wenigstens ein Viertel der Breite B der Kopfstütze. Fig. 1 lässt eine Mittelebene M der Kopfstütze erkennen. Je deutlicher die Position eines Kopfes eines Benutzers von einer Mittellage, also einer symmetrischen Lage bezüglich dieser Mittelebene M abweicht, umso schwieriger gestaltet sich die später noch zu beschreibende Messung.

Entsprechend können möglichst langgestreckte Elektroden solche Toleranzen aufgrund von Abweichungen von der Mittellage abfangen.

Bei dem Ausführungsbeispiel der Fig. 1 sind die drei Elektroden 23a, 23b, 23c nach Art eines Rechteckes schematisch dargestellt. Hierzu sei angemerkt, dass es auf die räumliche Ausgestaltung der drei Elektroden 23a, 23b, 23c nicht ankommt. Die drei Elektroden 23a, 23b, 23c können beispielsweise auch jeweils im Wesentlichen linienartig ausgestaltet sein.

Anhand der Fig. 2 soll nunmehr das Funktionsprinzip der erfindungsgemäßen Kopfstütze 10 erläutert werden:

Fig. 2 zeigt schematisch dargestellt den Kopf 26 eines Fahrgastes, der auf dem nicht dargestellten Fahrzeugsitz Platz genommen hat und der der Kopfstütze 10 angenähert ist. Fig. 2 lässt erkennen, dass zwischen dem Kopf 26 des Fahrgastes und der Vorderseite 32 ein Abstand verbleibt, was verdeutlichen soll, dass mit der erfindungsgemäßen Kopfstütze eine berührungslose Kopfpositionserkennung möglich ist.

Fig. 2 zeigt eine Kopfposition und Kopfstützenposition, die nicht optimal ist. Die Kopfstütze ist in der Situation der Fig. 2 zu niedrig. Es ist nämlich deutlich, dass die nur schematisch angedeutete Kopfstütze der Fig. 2 real eine etwas andere Kontur aufweist und insbesondere im oberen Bereich abgerundet ist. Auch ist die Fig. 2 nicht maßstäblich zu verstehen, sondern dem Betrachter ist deutlich, dass eine Kopfstütze, bezogen auf die Dimension eines Kopfes eines Fahrgastes, typischerweise kleiner ausgebildet ist als in Fig. 2 dargestellt.

Die Figuren der vorliegenden Patentanmeldung sollen lediglich dem Verständnis des Funktionsprinzips der erfindungsgemäßen Kopfstütze 10 dienen.

Fig. 2 zeigt, dass eine Ausbuchtung 33 des Kopfes 26 des Fahrgastes besteht. Diese Ausbuchtung ist typischerweise bei jedem Menschen vorhanden und stellt denjenigen Bereich des menschlichen Kopfes dar, der am weitesten nach hinten vorragt. Dem Betrachter der Fig. 2 wird dabei aber auch deutlich, dass die Ausbuchtung 33 gemäß Fig. 2 übertrieben dargestellt ist. Im medizinischen Sinne kann eine derartige Schädelausbuchtung auch als Protuberantia Occipitalis Externa bezeichnet werden, der den am weitesten nach hinten vorspringenden Bereich des Os Occipitale, also der Schädelplatte am unteren Hinterhaupt, beschreibt.

Von Interesse ist nun, dass der Schwerpunkt 27 eines Kopfes 26 eines Fahrgastes typischerweise etwa im Bereich der Ausbuchtung 33 des Kopfes 26, insbesondere auf gleicher Höhe wie die Ausbuchtung 33, liegt. Wenn es also gelingt, eine Position der Ausbuchtung 33 festzustellen, ließe dies auch eine Aussage über die Position des Schwerpunktes 27 des Kopfes 26 zu.

Die erfindungsgemäße Kopfstütze 10 sieht nun die Möglichkeit vor, eine automatische Detektion der Kopfposition relativ zu der aktuellen Kopfstützenposition vorzunehmen und die Kopfstütze 10 zur Erzielung der optimalen Ausrichtung der Kopfstütze 10 relativ zu dem Kopf 26 des Fahrgastes zu verlagern. Ausgehend von einer Position gemäß Fig. 2 wäre es daher wünschenswert, die Kopfstütze 10 derartig in Aufstellrichtung u zu verlagern, bis die mittlere Elektrode 23b sich etwa auf der Höhe des Schwerpunktes 27 des Kopfes 26, das heißt auch etwa im Bereich der Ausbuchtung 33 des Kopfes 26 befindet.

Hierzu wird zunächst zwischen der oberen Elektrode 23a und der mittleren Elektrode 23b eine Wechselspannung angelegt, die von der Steuereinheit 20 mit einer vorgegebenen Spannungsamplitude und einer vorgegebenen Frequenz erzeugt werden kann. Dies führt zur Erzeugung eines elektrischen Feldes, deren Feldlinie in Fig. 2 mit E₂ beispielhaft angedeutet sein soll. Dem Betrachter ist deutlich, dass tatsächlich, entgegen der Darstellung, eine Vielzahl von Feldlinien bestehen. Schließlich kann eine Messung zwischen der oberen Elektrode 23a und der mittleren Elektrode 23b durchgeführt werden.

Nach Durchführung der Messung, oder gegebenenfalls auch gleichzeitig, kann auch zwischen der mittleren Elektrode 23b und der unteren Elektrode 23c eine Messung durchgeführt werden. Die Steuereinheit 20 sorgt hierzu dafür, dass zwischen der mittleren Elektrode 23b und der unteren Elektrode 23c ebenfalls ein Wechselspannungssignal eingelegt wird, so dass es zur Ausbildung eines elektrischen Feldes, in Fig. 2 angedeutet durch eine Feldlinie E₁, kommt.

Schließlich ist der Steuereinheit 20 eine nicht näher dargestellte Messeinrichtung zugeordnet, die es beispielsweise ermöglicht, bei Anlegen einer Spannungsamplitude einer Wechselspannung an die jeweils äußere Elektrode 23a, 23c den durch die mittlere Elektrode 23b zurückfließenden Wechselstrom oder ein an der mittleren Elektrode 23b induziertes Wechselspannungssignal zu messen. Das gemessene Signal wird beeinflusst, wenn sich zwischen den beiden, bei der jeweiligen Messung angesprochenen Elektroden, der Kopf 26 des Fahrgastes befindet.

Fig. 2 zeigt, dass die Ausbuchtung 33 des Kopfes 26 in das elektrische Feld zwischen der oberen Elektrode 23a und der mittleren Elektrode 23b hineinragt. Anders ausgedrückt durchlaufen die elektrischen Feldlinien durch einen Bereich 33 des Kopfes 26. Da der Kopf 26 eines Menschen einen sehr hohen Wasseranteil aufweist, und da die Dielektrizität Er von Wasser in der Größenordnung von 81 liegt, wohingegen die Dielektrizität Er von Luft in der Größenordnung von 1 liegt, wird die Ausbuchtung 33 des Kopfes 26 das Ergebnis der Messung zwischen den Elektroden 23a und 23b beeinflussen. Da sich die Ausbuchtung 23 aber nicht in unmittelbarer Nachbarschaft der Elektroden 23b und 23c befindet, wird das Ergebnis der Messung zwischen diesen beiden Elektroden 23b und 23c von der Ausbuchtung 33, wenn überhaupt, nur in einem sehr viel geringeren Maße beeinflusst.

Die Messung zwischen der oberen und der mittleren Elektrode wird somit zu einem Messergebnis führen, welches durch die geänderte Kapazität von Bereichen des Kopfes 26 in starkem Maße beeinflusst wird, während eine Messung zwischen der mittleren und der unteren Elektrode weniger stark beeinflusst wird. Damit wird bei einer Relativposition der Kopfstütze 10 gemäß Fig. 2 ein Vergleich der beiden Messergebnisse der beiden nacheinander durchzuführenden Messungen dazu führen, dass unterschiedliche Messergebnisse erhalten werden. Aus diesem Unterschied kann die Steuereinheit 20 erkennen, dass die Kopfstütze bezogen auf die aktuelle Kopfposition zu niedrig eingestellt ist und daher in Auffahrrichtung u verlagert werden muss.

Für den Fall, dass eine optimale Kopfstützenposition bestünde, würde eine Messung zwischen der oberen Elektrode 23a und der mittleren Elektrode 23b einerseits und eine Messung zwischen der unteren Elektrode 23c und der mittleren Elektrode 23b andererseits zu identischen oder jedenfalls sehr ähnlichen Messergebnissen führen, so dass nach einem Vergleich der beiden Messergebnisse die Steuereinheit 20 feststellen kann, dass eine optimale Kopfstützenposition erreicht worden ist und keine weitere Verlagerung notwendig ist.

Ein Vergleich der Ergebnisse der beiden Messungen kann durch eine Vergleichsvorrichtung 28 durchgeführt werden, die als elektronisches Bauelement insbesondere ein Bestandteil der Steuereinheit 20 sein kann. Vorzugsweise ist die Steuereinheit 20 ein vergossene Platine, auf der die erforderlichen elektronischen Bauelemente angeordnet sind. Die Steuereinheit 20 kann beispielsweise auch einen oder mehrere Speicher enthalten, in denen Messergebnisse zwischengespeichert werden. Auch kann die Steuereinheit 20 tabellarisch abgelegte Vergleichswerte enthalten, aus denen beispielsweise die Steuereinheit 20 auch berechnen kann, um welchen Verlagerungsweg v die Kopfstütze 10 verlagert werden muss, um in Kenntnis der Messergebnisse eine optimale Kopfstützenposition zu erreichen.

Die Messungen zur Detektion der Kopfposition bezogen auf die aktuelle Relativposition der Kopfstütze können ständig oder zu vorgegebenen Zeitpunkten, vorzugsweise zu bestimmten Intervallen, durchgeführt werden. Vorzugsweise wird eine initiale Messung zu Beginn oder vor Beginn einer Fahrt mit dem Fahrzeug vorgenommen. Nachdem die Kopfstütze 10 verlagert worden ist, kann eine Überprüfung dahingehend durchgeführt werden, ob nach Durchführung der Verlagerungsbewegung eine optimale Kopfstützenposition erzielt worden ist. Schließlich kann auch im Laufe der Fahrt mit dem Fahrzeug zu bestimmten Abständen, beispielsweise alle 15 Min. od. dgl. eine erneute Überprüfung der Kopfstützenposition durchgeführt und bei Bedarf eine Verlagerung der Kopfstütze 10 veranlasst werden.

Angemerkt sei, dass das Funktionsprinzip lediglich schematisch beschrieben worden ist. Die Zeichnungen zeigen demzufolge auch nur blockschaltbildartige Darstellungen, wobei dem Fachmann deutlich ist, dass beispielsweise eine die Steuereinheit 20 mit dem Antriebsmotor 15 verbindende Leitung 19 sowie auch die Spannungsversorgungsleitung 17 typischerweise wenigstens zweiadrig ausgebildet ist. Des Weiteren ist dem Fachmann deutlich, dass im Ergebnis der festgestellten Messwerte nach Durchführung eines Vergleichs durch die Vergleichsvorrichtung 28 die Steuereinheit 20 über die Leitung 19 dem Antriebsmotor 15 entsprechende Steuersignale übermitteln kann, um eine Verlagerung der Kopfstütze vorzunehmen oder nicht.

Schließlich ist dem Fachmann auch deutlich, dass die erfindungsgemäße Kopfstütze auf eine Traverse 14 verzichten kann und eine unmittelbare Ansteuerung der Kopfstützentragstange 11a, 11b über den Antriebsmotor 15 vorgesehen sein kann, um die Kopfstütze zu verlagern. Schließlich kann der Antrieb 15 auch in der Kopfstütze 10 angeordnet sein und eine Verlagerung der Kopfstütze relativ zu den Tragstangen 11a und 11b vornehmen.

Die Zahl der Elektroden 23a, 23b, 23c ist beliebig. Mindestens müssen allerdings drei Elektroden vorgesehen sein.

Denkbar ist auch, dass beispielsweise fünf oder sieben oder neun oder noch mehr Elektroden vorgesehen sind, wobei mit zunehmender Zahl der Elektroden auch eine höhere Messgenauigkeit erzielt werden könnte. Für den Fall, dass eine größere Anzahl an Elektroden vorgesehen ist, kann es auch mehrere mittlere Elektroden geben, beispielsweise eine obere mittlere Elektrode und eine untere mittlere Elektrode. Wichtig ist für die erfindungsgemäße Kopfstütze 10, dass eine Vergleichsmessung durchgeführt werden kann, so dass eine obere Messung und eine untere Messung durchgeführt werden kann und die obere und die untere Messung miteinander verglichen werden können.

Fig. 2 deutet eine metallische Abschirmung 25 an, die auf der dem Kopf 26 abgewandten Seite der Elektrodenanordnung 22 angeordnet ist. Die Abschirmung 25 kann beispielsweise aus einer Metallfolie, z.B. einer Kupferfolie, bestehen und befindet sich unmittelbar benachbart der Elektrodenanordnung 22. Die Abschirmung hat in Versuchen die Messgenauigkeit der Vorrichtung erhöhen können. Die Abschirmung 25 erstreckt sich vorteilhaft über im Wesentlichen die gesamte Breite B und Höhe der Kopfstütze 10, zumindest aber über einen Bereich, der hinsichtlich seiner Kontur durch die äußeren Abmessungen der Elektroden 23a, 23b, 23c bestimmt ist.

Anhand der Figuren 3 und 4 soll nunmehr beschrieben werden, wie der konstruktive Aufbau einer erfindungsgemäßen Kopfstütze 10 gewählt werden kann:

Fig. 3 zeigt ein Ausführungsbeispiel, bei dem ein Polsterträger 29, beispielsweise aus Kunststoff bestehend, von einem Polsterschaum 30 allseitig umgeben ist. Das Polster- oder Schaumteil 30 wird außenseitig von einem Bezug 31 umhüllt, der beispielsweise aus Leder oder aus textilem Material bestehen kann. Das Schaumteil 30 dient der Bereitstellung eines Komforts und der gewünschten, dämpfenden und Sicherheit bietenden mechanischen Eigenschaften der Kopfstütze.

Erfindungsgemäß ist die Elektrodenanordnung 22 mit den drei Elektroden 23a, 23b, 23c zwischen der vorderen Seite 34 des Polsterträgers 29 und der Innenseite 35 des Polsterteils 30 angeordnet. Die Elektrodenanordnung 22 ist in Fig. 3 übertrieben groß dargestellt und ist, entgegen der Darstellung der Fig. 3 vorzugsweise als eine dünne Folie ausgebildet, deren Wanddicke vernachlässigbar ist. Die drei Elektroden 23a, 23b, 23c können auf einen Teil der Folie aufgedruckt sein und weisen somit eine geringe Dicke von typischerweise weit weniger als 1 mm auf.

Bei einem alternativen Ausführungsbeispiel gemäß Fig. 4 ist die Elektrodenanordnung 22 zwischen der Außenseite 36 des Polsterteils 30 und der Innenseite 37 des Bezugsstoffes 31 angeordnet. Die Elektrodenanordnung 22 ist bei dieser Ausgestaltung derartig flexibel ausgebildet, dass die Kompressibilität des Polsterteils 30 durch die Elektrodenanordnung 22 nicht beeinträchtigt wird. Wiederum zeigt Fig. 4 die Elektroden 23a, 23b, 23c in einem übertriebenen Maßstab.

Anzumerken ist, dass der Bezugsstoff 31 entgegen der Darstellungen der Figuren 3 und 4 unmittelbar, d.h. unbeabstandet, auf der jeweiligen Außenseite des Polsterteils 30 bzw. der Elektrodenanordnung 22 anliegt.

Zum besseren Verständnis der Figuren sei noch angemerkt, dass Fig. 2 weder die Traverse noch den Antriebsmotor noch die weiteren Zuleitungen zeigt, wobei in den Figuren 3 und 4 gegenüber der Fig. 2 auch noch die elektrischen Leitungen und auch die Steuereinheit der Übersichtlichkeit halber weggelassen worden sind.

Angemerkt sei, dass die Ausbildung der Steuereinheit 20 und der zugehörigen Vergleichsvorrichtung 28, die in Fig. 2, aber nicht in Fig. 1 dargestellt ist, auf beliebige, geeignete Weise erfolgen kann. Die Steuereinheit 20 kann auch eine Messelektronik beinhalten oder eine Messelektronik, in Form geeigneter elektrischer oder elektronischer Bauelemente. Die Messelektronik kann der Steuereinheit 20 zugeordnet sein. Die Messelektronik oder die Steuereinheit 20 können beispielsweise auch Verstärkerschaltungen umfassen, um die Messsignale in geeigneter Weise zu verstärken.

Die Steuereinheit kann beispielsweise von dem elektronischen Bauelement "Motorola Freescale Semiconductor 33794" bereitgestellt sein, der bereits geeignete Messeingänge und -ausgänge aufweist. Informationen über diesen Prozessor können beispielsweise unter www.freescale.com von dem Hersteller erhalten werden.

## Patentansprüche

1. Kopfstütze (10) für einen Fahrzeugsitz (12), umfassend eine Detektionseinrichtung (21), mit der eine Position eines Kopfes (26) eines auf dem Fahrzeugsitz befindlichen Fahrgastes relativ zu der Kopfstütze detektierbar ist, wobei ein Antrieb (15) vorgesehen ist, mit dem die Kopfstütze relativ zu dem Fahrzeugsitz in Abhängigkeit der detektierten Position des Kopfes verlagerbar ist, **dadurch gekennzeichnet, dass** die Detektionseinrichtung eine Elektrodenanordnung (22) aufweist, die wenigstens drei Elektroden (23a, 23b, 23c) umfasst, die sich jeweils über einen wesentlichen Teil (L) der Breite (B) der Kopfstütze, nämlich über wenigstens ein Viertel der Breite der Kopfstütze, in Fahrzeugquerrichtung (Q) erstrecken, und die in Vertikalrichtung voneinander beabstandet sind (a, b).

2. Kopfstütze nach Anspruch 1, **dadurch gekennzeichnet, dass** die Elektrodenanordnung (22) wenigstens eine obere (23a), eine mittlere (23b) und eine untere Elektrode (23c) umfasst.

3. Kopfstütze nach Anspruch 1 oder 2, **dadurch gekennzeichnet, dass** die Elektrodenanordnung (22) von einer vorgefertigten, handhabbaren Baueinheit gebildet ist.

4. Kopfstütze nach einem der vorgenannten Ansprüche, **dadurch gekennzeichnet, dass** die drei Elektroden (23a, 23b, 23c) einen vorgegebenen, festen Abstand (a, b) zueinander aufweisen.

5. Kopfstütze nach einem der vorgenannten Ansprüche, **dadurch gekennzeichnet, dass** sich die drei Elektroden über wenigstens ein Drittel der Breite der Kopfstütze, vorzugsweise über wenigstens die Hälfte der Breite der Kopfstütze, in Fahrzeugquerrichtung (Q) erstrecken.

6. Kopfstütze nach Anspruch 2 oder nach einem der vorgenannten, auf Anspruch 2 rückbezogenen Ansprüche, **dadurch gekennzeichnet, dass** der Elektrodenanordnung eine Steuereinheit (20) zugeordnet ist, mit der eine erste Messung, insbesondere zwischen der oberen (23a) und der mittleren Elektrode (23b), und eine zweite Messung, insbesondere zwischen der mittleren (23b) und der unteren Elektrode (23c), durchführbar ist.

7. Kopfstütze nach einem der vorgenannten Ansprüche, **dadurch gekennzeichnet, dass** mit der Steuereinheit (20) ein elektrisches Wechselfeld zwischen jeweils zwei Elektroden anlegbar ist.

8. Kopfstütze nach Anspruch 6, **dadurch gekennzeichnet, dass** die Messung ein Messergebnis liefert, in das die Dielektrizität (εᵣ) zumindest eines Teiles des Kopfes des Fahrgastes mit eingeht oder das von der Dielektrizität (εᵣ) zumindest eines Teiles des Kopfes des Fahrgastes beeinflusst wird.

9. Kopfstütze nach Anspruch 6, **dadurch gekennzeichnet, dass** die Detektionseinrichtung (21) eine Vergleichsvorrichtung (28) aufweist, mit der die Ergebnisse der ersten Messung und der zweiten Messung miteinander vergleichbar sind.

10. Kopfstütze nach einem der vorgenannten Ansprüche, insbesondere nach Anspruch 7, **dadurch gekennzeichnet, dass** die Elektrodenanordnung (22) mit einer Steuereinheit (20) verbunden ist.

11. Kopfstütze nach Anspruch 10, **dadurch gekennzeichnet, dass** die Steuereinheit (20) in der Kopfstütze angeordnet ist.

12. Kopfstütze nach einem der vorgenannten Ansprüche, **dadurch gekennzeichnet, dass** die Kopfstütze über wenigstens eine Tragstange, vorzugsweise über zwei Tragstangen (11a, 11b), an dem Fahrzeugsitz befestigt ist.

13. Kopfstütze nach Anspruch 12, **dadurch gekennzeichnet, dass** elektrische Signalleitungen (19) und/oder Spannungsversorgungsleitungen (19) für die Elektrodenanordnung (22) und/oder für eine Steuereinheit (20) durch wenigstens eine Tragstange (11a) hindurch verlaufen.

14. Kopfstütze nach einem der vorgenannten Ansprüche, **dadurch gekennzeichnet, dass** der Antrieb (15) in oder an dem Fahrzeugsitz, insbesondere in einer Lehne des Fahrzeugsitzes, angeordnet ist.

15. Kopfstütze nach einem der vorgenannten Ansprüche, **dadurch gekennzeichnet, dass** der Elektrodenanordnung (22) ein metallisches Abschirmelement (25) zugeordnet ist, welches auf der dem Kopf (26) abgewandten Seite der Elektrodenanordnung angeordnet ist.

16. Kopfstütze nach einem der vorgenannten Ansprüche, **dadurch gekennzeichnet, dass** die Elektrodenanordnung (22) nahe der dem Kopf (26) des Fahrgastes zugewandten, vorderen Seite (32) der Kopfstütze (10) angeordnet ist.

17. Kopfstütze nach einem der vorgenannten Ansprüche, **dadurch gekennzeichnet, dass** die Elektrodenanordnung (22) folienartig ausgebildet ist.

18. Kopfstütze nach Anspruch 17, **dadurch gekennzeichnet, dass** die Elektroden (23a, 23b, 23c) auf die Folie oder auf einen Teil der Folie aufgedruckt sind.

19. Kopfstütze nach einem der vorgenannten Ansprüche, **dadurch gekennzeichnet, dass** die Elektrodenanordnung (22) zwischen einem Polsterteil (30) und einem Bezugteil (33) der Kopfstütze angeordnet ist.

20. Kopfstütze nach einem der Ansprüche 1 bis 18, **dadurch gekennzeichnet, dass** die Elektrodenanordnung (22) zwischen einem Tragkörper (29) für ein Polsterteil (30) und dem Polsterteil (30) angeordnet ist.

## Claims

1. Headrest (10) for a vehicle seat (12), comprising a detection apparatus (21) by means of which a position, relative to the headrest, of the head (26) of a passenger located on the vehicle seat can be detected, wherein a drive (15) is provided, by means of which the headrest can be displaced, relative to the vehicle seat, in dependence upon the detected position of the head,
**characterised in that** the detection apparatus has an electrode arrangement (22) which comprises at least three electrodes (23a, 23b, 23c) which each extend over a substantial part (L) of the width (B) of the headrest, namely over at least a quarter of the width of said headrest, in the transverse direction (Q) of the vehicle, and which are spaced apart from one another in the vertical direction (a, b).

2. Headrest according to claim 1, **characterised in that** the electrode arrangement (22) comprises at least an upper electrode (23a), a middle electrode (23b) and a lower electrode (23c).

3. Headrest according to claim 1 or 2, **characterised in that** the electrode arrangement (22) is formed by a prefabricated, manageable structural unit.

4. Headrest according to one of the abovementioned claims, **characterised in that** the three electrodes (23a, 23b, 23c) are at a predetermined, fixed distance (a, b) from one another.

5. Headrest according to one of the abovementioned claims, **characterised in that** the three electrodes extend over at least a third of the width of the headrest, and preferably over at least half of the width of the headrest, in the transverse direction (Q) of the vehicle.

6. Headrest according to claim 2 or one of the abovementioned claims related to claim 2, **characterised in that** there is associated with the electrode arrangement a control unit (20) by means of which it is possible to carry out a first measurement, particularly between the upper electrode (23a) and the middle electrode (23b), and a second measurement, particularly between the middle electrode (23b) and the lower electrode (23c).

7. Headrest according to one of the abovementioned claims, **characterised in that** it is possible, by means of the control unit (20), to apply an alternating electrical field between two electrodes at a time.

8. Headrest according to claim 6, **characterised in that** the measurement supplies a result of measurement which also includes the dielectricity (εᵣ) of at least part of the passenger's head or which is influenced by the dielectricity (εᵣ) of at least part of the passenger's head.

9. Head rest according to claim 6, **characterised in that** the detection apparatus (21) has a comparison device (28) by means of which it is possible to compare the results of the first measurement and second measurement with one another.

10. Headrest according to one of the abovementioned claims, particularly claim 7, **characterised in that** the electrode arrangement (22) is connected to a control unit (20).

11. Headrest according to claim 10, **characterised in that** the control unit (20) is arranged in said headrest.

12. Headrest according to one of the abovementioned claims, **characterised in that** said headrest is fastened to the vehicle seat via at least one supporting bar, and preferably via two supporting bars (11a, 11b).

13. Headrest according to claim 12, **characterised in that** electric signal lines (19) and/or voltage supply lines (19) for the electrode arrangement (22) and/or for a control unit (20) run through at least one supporting bar (11a).

14. Headrest according to one of the abovementioned claims, **characterised in that** the drive (15) is arranged in or on the vehicle seat, particularly in a backrest of said vehicle seat.

15. Headrest according to one of the abovementioned claims, **characterised in that** there is associated with the electrode arrangement (22) a metal screening element (25) which is arranged on that side of said electrode arrangement which faces away from the head (26).

16. Headrest according to one of the abovementioned claims, **characterised in that** the electrode arrangement (22) is arranged close to that front side (32) of the headrest (10) which faces towards the passenger's head (26).

17. Headrest according to one of the abovementioned claims, **characterised in that** the electrode arrangement (22) is of film-like construction.

18. Headrest according to claim 17, **characterised in that** the electrodes (23a, 23b, 23c) are printed onto the film or onto part of the film.

19. Headrest according to one of the abovementioned claims, **characterised in that** the electrode arrangement (22) is arranged between a cushion part (30) and a cover part (33) of the headrest.

20. Headrest according to one of claims 1 to 18, **characterised in that** the electrode arrangement (22) is arranged between a supporting body (29) for a cushion part (30) and said cushion part (30).

## Revendications

1. Appui-tête (10) pour un siège de véhicule (12) comprenant un dispositif de détection (21) avec lequel une position de la tête (26) d'un passager assis sur le siège du véhicule peut être détectée par rapport à l'appui-tête, une commande (15) étant prévue, avec laquelle l'appui-tête peut être déplacé par rapport au siège du véhicule en fonction de la position détectée de la tête, **caractérisé en ce que** le dispositif de détection présente un ensemble d'électrodes (22) qui comprend au moins trois électrodes (23a, 23b, 23c) qui s'étendent respectivement sur une partie essentielle (L) de la largeur (B) de l'appui-tête, à savoir sur au moins un quart de la largeur de l'appui-tête, dans le sens transversal du véhicule (Q) et qui sont espacées les unes des autres dans le sens vertical (a, b).

2. Appui-tête selon la revendication 1, **caractérisé en ce que** l'ensemble d'électrodes (22) comprend au moins une électrode supérieure (23a), une électrode médiane (23b) et une électrode inférieure (23c).

3. Appui-tête selon la revendication 1 ou 2, **caractérisé en ce que** l'ensemble d'électrodes (22) est formé d'une unité modulaire maniable et préfabriquée.

4. Appui-tête selon l'une des précédentes revendications, **caractérisé en ce que** les trois électrodes (23a, 23b, 23c) présentent un espacement (a, b) les unes par rapport aux autres, fixe et prédéfini.

5. Appui-tête selon l'une des précédentes revendications, **caractérisé en ce que** les trois électrodes s'étendent sur au moins un tiers de la largeur de l'appui-tête, de préférence, sur au moins la moitié de la largeur de l'appui-tête, dans le sens transversal du véhicule (Q).

6. Appui-tête selon la revendication 2 ou selon l'une des précédentes revendications se référant à la revendication 2, **caractérisé en ce qu'**est affectée à l'ensemble d'électrodes une unité de commande (20) avec laquelle une première mesure, en particulier entre l'électrode médiane (23b) et l'électrode supérieure (23a), et une deuxième mesure, en particulier entre l'électrode médiane (23b) et l'électrode inférieure (23c), peuvent être réalisées.

7. Appui-tête selon l'une des précédentes revendications, **caractérisé en ce qu'**un champ alternatif électrique peut être placé entre respectivement deux électrodes, avec l'unité de commande (20).

8. Appui-tête selon la revendication 6, **caractérisé en ce que** la mesure fournit un résultat de mesure dans lequel la dieléctricité (εᵣ) au moins d'une partie de la tête du passager intervient ou qui est influencé par la dieléctricité (εᵣ) au moins d'une partie de la tête du passager.

9. Appui-tête selon la revendication 6, **caractérisé en ce que** le dispositif de détection (21) présente un dispositif de comparaison (28) avec lequel les résultats de la première mesure et de la deuxième mesure peuvent être comparés les uns avec les autres.

10. Appui-tête selon l'une des précédentes revendications, en particulier selon la revendication 7, **caractérisé en ce que** l'ensemble d'électrodes (22) est relié à une unité de commande (20).

11. Appui-tête selon la revendication 10, **caractérisé en ce que** l'unité de commande (20) est disposée dans l'appui-tête.

12. Appui-tête selon l'une des précédentes revendications, **caractérisé en ce que** l'appui-tête est fixé au siège du véhicule par le biais au moins d'une tige support, de préférence par le biais de deux tiges support (11a, 11b).

13. Appui-tête selon la revendication 12, **caractérisé en ce que** des lignes de signaux électriques (19) et/ou des lignes d'alimentation en courant (19) pour l'ensemble d'électrodes (22) et/ou pour une unité de commande (20) passent à travers au moins d'une tige support (11a).

14. Appui-tête selon l'une des précédentes revendications, **caractérisé en ce que** la commande (15) est disposée dans ou au niveau du siège du véhicule, en particulier dans un dossier du siège du véhicule.

15. Appui-tête selon l'une des précédentes revendications, **caractérisé en ce qu'**un élément de protection (25) métallique qui est disposé sur le côté, opposé à la tête (26), de l'ensemble d'électrodes est affecté à l'ensemble d'électrodes (22).

16. Appui-tête selon l'une des précédentes revendications, **caractérisé en ce que** l'ensemble d'électrodes (22) est disposé près du côté avant (32), orienté vers la tête (26) du passager, de l'appui-tête (10).

17. Appui-tête selon l'une des précédentes revendications, **caractérisé en ce que** l'ensemble d'électrodes (22) est conçu sous forme de feuille.

18. Appui-tête selon la revendication 17, **caractérisé en ce que** les électrodes (23a, 23b, 23c) sont imprimées sur la feuille ou sur une partie de la feuille.

19. Appui-tête selon l'une des précédentes revendications, **caractérisé en ce que** l'ensemble d'électrodes (22) est disposé entre une partie de rembourrage (30) et une partie de housse (33) de l'appui-tête.

20. Appui-tête selon l'une des revendications 1 à 18, **caractérisé en ce que** l'ensemble d'électrodes (22) est disposé entre un corps de support (29) pour une partie de rembourrage (30) et la partie de rembourrage (30).
